# EUROPÄISCHE PATENTANMELDUNG

(11) **EP 2 282 152 A2**
(43) Veröffentlichungstag der Anmeldung: **09.02.2011**
(21) Anmeldenummer: 10013556.5
(22) Anmeldetag: 14.03.2006
(51) Int. Cl.: F28C 1/00, F28F 25/02, E04H 5/12

(54) **Nasskühlturm**

(30) Priorität: 23.03.2005 DE 102005013530
(62) Teilanmeldung aus: 09013411.5
(71) Anmelder: SPX-Cooling Technologies GmbH, 40882 Ratingen (DE)
(72) Erfinder: Zimmermann, Peter, 45472 Mülheim an der Ruhr (DE)
(74) Vertreter: Tomerius, Isabel

(57) **Zusammenfassung**

Die Erfindung betrifft einen Nasskühlturm (1) in Blockanordnung, mit mehreren Zellen (4) in einem Block (3), wobei die Blockanordnung innenliegende Wände (50, 60) aus Beton aufweist. Wasser ist von einem Steigeschacht (13, 14, 15, 16, 20, 21, 36) über Hauptverteilerrohre (18, 22, 23, 24, 30, 34, 35, 37, 38) und sich daran anschließende Nebenverteilerrohre (25, 26, 27, 28, 29, 31, 32, 33, 39, 40) zu einer Zelle (4) transportierbar, wobei Nebenverteilerrohre (25, 26, 32, 39) einer Zelle (4) rechtwinklig zu Nebenverteilerrohren (27, 28, 33, 40) einer dazu benachbarten Zelle (4) angeordnet sind.

## Beschreibung

Die Erfindung betrifft einen Nasskühlturm in Blockanordnung, gemäß dem Oberbegriff des Anspruchs 1.

Ein Nasskühlturm, wie er beispielsweise aus DE 196 51 848 C1 bekannt ist, weist innerhalb eines Kühlturmmantels im Wesentlichen horizontal angeordnete Flüssigkeitsverteilleitungen auf, wobei die Flüssigkeit über einen Steigeschacht den Verteilleitungen zugeführt wird. Abzukühlende warme Flüssigkeit, insbesondere Wasser, wird aus den Verteilleitungen von oben nach unten zu Rieseleinbauelementen verrieselt. Dabei gelangen die Flüssigkeitstropfen in Kontakt mit von außen einströmender Kühlluft, die über Lufteintrittsgitter unten am Kühlturm angesaugt wird. Die Luft wird entgegen des Wasserfalls durch die Rieselkörpereinbauten nach oben gesaugt. Besitzt der Luftstrom eine niedrigere Temperatur als das abzukühlende Wasser, wird dem Wasser Wärme entzogen und kühlt dabei ab. Die warme feuchte Luft wird durch einen auf dem Kühlturm angeordneten Ventilator nach oben abgesaugt und an die Umgebung abgegeben. Das gekühlte Wasser fällt nach unten und sammelt sich in Becken, die unter den Verteilleitungen angeordnet sind. Es kann der Wärmequelle erneut zugeführt werden.

Der Erfindung liegt die Aufgabe zugrunde, einen Kühlturm der oben genannten Art anzugeben, bei welchem die Sicherheit verbessert ist.

Diese Aufgabe wird gelöst durch einen Nasskühlturm gemäß dem Anspruch 1. Weiterbildungen sind Gegenstand der abhängigen Ansprüche.

Dies Aufgabe wird dadurch gelöst, dass ein Kühlturm in Blockanordnung mit mehreren Zellen in einem Block verwendet wird. Eine Blockanordnung hat z. B. mindestens 2 + n (n = 1, 2, 3, ...) Zellen in einer Längsrichtung und mindestens 2+m (m = 1, 2, 3, ...) Zellen in einer sich zur Längsrichtung senkrecht erstreckenden Querrichtung. Eine solche Blockanordnung hat somit mehr als 2 Zellen sowohl in der Block-Längsrichtung als auch in der Block-Querrichtung. Dies umfasst vorzugsweise einen Block mit 3 x 3 Zellen oder 4 x 4 Zellen oder 4 x 3 Zellen oder 5 x 3 Zellen usw.

Bei einer solche Blockanordnung wird ein konzentrierterer oder stärker gebündelter Abluftstrom erreicht. Damit wird zum einen eine höhere Kühlleistung auch unter ungünstigen Umgebungsbedingungen (Wind) erzielt. Zum anderen verringert sich durch die geringere Rezirkulation beziehungsweise das Ansaugen der eigenen Kühlturm-Schwaden die Belastung der Kühlturmumgebung mit feuchtwarmer Luft und damit die Gefahr von Korrosion in der Kühlturmumgebung. Dies gilt besonders bei Kühltürmen, die salzhaltige Luft von Seewasser oder Meerwasser ansaugen. Durch den konzentrierteren Abluftstrom und die damit einhergehende geringere Rezirkulation verringert sich auch die Geräuschbelastung für die Umgebung. Allgemein wird durch den erfindungsgemäßen Kühlturm die Immissionsbelastung der Umgebung gesenkt. Ein weiterer Vorteil liegt darin, dass durch die kompakte Bauweise ein geringerer Platzbedarf für den Kühlturm benötigt wird.

Ferner ist vorgesehen, dass der Kühlturm innenliegende Wände aus Beton aufweist, wobei vorzugsweise die Wände in den Hauptachsen der Blockanordnung angeordnet sind. Damit ist es möglich, einen großen Anteil des erfindungsgemäßen Kühlturms aus glasfaserverstärktem Kunststoff (GFK) zu bauen, wobei die Betonwände als "Rückgrat" für die GFK-Struktur und Maßnahme zur Stabilisierung des Kühlturms dienen.

Vorzugsweise erstrecken sich die Betonwände vom Flüssigkeitssammelbecken des Kühlturms bis zum Kühlturmdach. Mittels der GFK-Struktur wird allgemein eine Leichtbau-Konstruktion erreicht. Durch die Betonwände, die bevorzugt in den Hauptachsen des Kühlturms angeordnet sind, ist es zusätzlich möglich, auf Querverstrebungen und Diagonalverstrebungen aus GFK zu verzichten, wobei trotzdem eine sichere Statik erzielt wird. Durch die nicht mehr erforderlichen GFK-Verstrebungen wird zusätzlich eine kostengünstigere Konstruktion erreicht.

Bevorzugt dienen die in den Hauptachsen angeordneten Betonwände als Stützkonstruktion für weitere Wände aus glasfaserverstärktem Kunststoff oder Holz.

Ein weiterer Vorteil einer solchen Mischbauweise aus GFK und Beton besteht darin, dass die Betonwände als Brandschutzwände wirken können. Sind die Betonwände in den Hauptachsen des Kühlturms angeordnet, entstehen deutlich voneinander getrennte Brandschutzzonen. Bei einer Blockanordnung mit 4 x 4 Zellen ergeben sich somit 4 Brandschutzzonen, welche jeweils 4 Zellen einschließen.

Gemäß einer weiteren bevorzugten Ausführungsform der Erfindung sind die Wände aus Beton über einen Kühlturmmantel hinaus mit einer Verlängerung versehen. Dies ist vorteilhaft, da zum einen ein weiterer Schutz vor Überschlag durch Feuer gegeben ist. Zum anderen wird durch die Verlängerung der Wände eine Windleitwand geschaffen, welche einen größeren Anteil der auf den Kühlturm zuströmenden Luft abfängt und somit die Luftzufuhr zum Kühlturm verbessert.

Ferner sind gemäß einer weiteren bevorzugten Ausführungsform der Erfindung die Wände aus Beton über das Kühlturmdach hinaus mit einer Verlängerung versehen. Damit wird bei einem Feuer die Brandzone daran gehindert, einfach auf die benachbarten Zellen eines Kühlturmes überzugreifen. Zusätzlich kanalisiert diese Maßnahme die von den Ventilatoren abgeführte Warmluft.

Der erfindungsgemäße Kühlturm weist gemäß einer weiteren bevorzugten Ausführungsform abgeschrägte oder abgerundete Eckbereiche, insbesondere des Kühlturmmantels, auf. Damit wird eine Luftumströmung des Kühlturms so verbessert, dass weniger Luftanteile in Richtung zum Kühlturmboden gelenkt werden, wodurch sich die Gefahr einer Rezirkulation zusätzlich senken lässt.

Gemäß einer weiteren bevorzugten Ausführungsform der Erfindung ist das abzukühlende Wasser von einem Steigeschacht über Hauptverteilerrohre und sich daran anschließende Nebenverteilerrohre zu mindestens einer Zelle des Kühlturms transportierbar, wobei die Nebenverteilerrohre einer Zelle rechtwinklig zu Nebenverteilerrohren einer dazu benachbarten Zelle angeordnet sind. Gemäß einer anderen Ausführungsform der Erfindung sind die Nebenverteilerrohre einer Zelle parallel zu Nebenverteilerrohren einer dazu benachbarten Zelle angeordnet. Bei der letzteren Anordnung ist nur ein Hauptverteilerrohr erforderlich. Sind die Nebenverteilerrohre rechtwinklig zueinander angeordnet, ist in beiden Hauptachsen ein Hauptverteilerrohr erforderlich. Diese Lösung bietet sich bei einem symmetrischen Aufbau des Kühlturms an, wenn zum Beispiel in den Hauptachsen Wände aus Beton vorgesehen sind und in diesen Hauptverteilerrohren verlegt werden können.

Gemäß einer weiteren bevorzugten Ausführungsform der Erfindung ist in dem Kühlturm für mindestens sechs Zellen ein gemeinsamer Steigeschacht zur Wassereinspeisung in die Zellen vorgesehen. Dies ist vorteilhaft, da bei einem zentralen Steigeschacht geringere Kosten für Rohrleitungen, Kanäle usw. anfallen als bei einer Konstruktion, die für jede Zelle einen einzelnen Steigeschacht aufweist. Die Pumpleistung für das abzukühlende Wasser erhöht sich bei einem zentralen Steigeschacht nur unwesentlich, so dass immer noch ein wirtschaftlicher Vorteil im Vergleich zu der Konstruktion eines Kühlturmes mit einem für jede Zelle einzelnen Steigeschacht bestehen bleibt.

In einer weiteren Ausführungsform der Erfindung ist aus dem gemeinsamen Steigeschacht eine Einspeisung für einzelne Zellen oder für paarweise angeordnete Zellen durchführbar.

Ferner ist bei einer weiteren Ausführungsform der Erfindung in den Betonwänden mindestens ein Steigeschacht zur Wassereinspeisung in die Zellen vorgesehen. Damit lässt sich bei einer Mischbauweise aus GFK oder Holz mit Betonwänden vorzugsweise in den Hauptachsen die Kühlturm-Stabilisierung mit der Zufuhr des abzukühlenden Wassers kombinieren, so dass ein geringerer zusätzlicher Platzbedarf besteht.

Nachfolgend wird die Erfindung anhand von in der Zeichnung dargestellten Ausführungsbeispielen weiter beschrieben. Es zeigen schematisch:
- Fig. 1: eine Draufsicht auf einen Kühlturm in Blockbauweise gemäß einer ersten Ausfüh- rungsform mit 16 Zellen;
- Fig. 2: einen Horizontalquerschnitt durch den Kühlturm der ersten Ausführungsform gemäß Fig. 1;
- Fig. 3: eine Seitenansicht des Kühlturms gemäß Fig. 1;
- Fig. 4 und 5: einen zweiten und einen dritten Horizontalquerschnitt durch den Kühlturm gemäß Fig. 1;
- Fig. 6: Fig. 6 eine Draufsicht auf einen Kühlturm einer zweiten Ausführungsform mit 16 Zel- len; und
- Fig. 7, 8 und 9: einen Horizontalquerschnitt durch den Kühlturm gemäß Fig. 6 mit Beispielen für die Anordnung von Hauptverteilerrohren und Nebenverteilerrohren für die Wasserzufuhr.

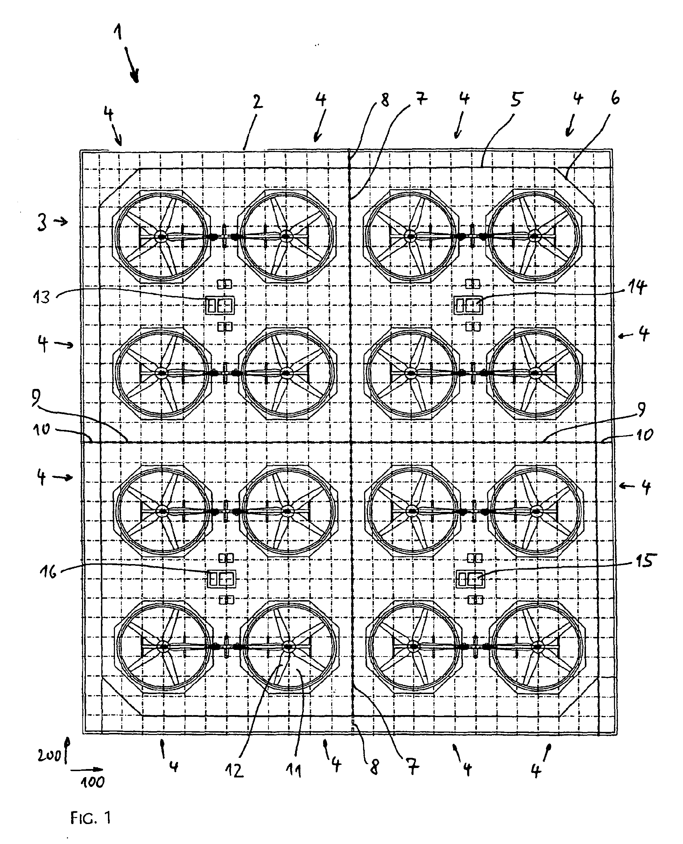

In Figur 1 ist ein Nasskühlturm 1 einer ersten Ausführungsform der Erfindung in der Draufsicht dargestellt (die nachfolgenden Ausführungen gelten ebenso für einen Hybridkühlturm) . Er weist vier Zellen 4 in einer Längsrichtung, mit dem Pfeil 100 markiert, und vier Zellen 4 in einer dazu senkrecht angeordneten Querrichtung, mit dem Pfeil 200 markiert, auf, so dass insgesamt 16 Zellen einen quadratischen Block 3 bilden. Die Zellen 4 des Blocks 3 sind von einem Kühlturmmantel 5 umgeben. Bei dieser Ausführungsform weist der Kühlturmmantel 5 an den äußeren Ecken des Blocks 3 jeweils abgeschrägte oder abgerundete Ecken 6 auf. Die symmetrische Struktur des Blockes 3 wird von Hauptachsen 7 und 9 durchzogen, die senkrecht zueinander angeordnet sind. Sie weisen am äußeren Rand jeweils eine Verlängerung 8, 10 auf, die über den Kühlturmmantel 5 seitlich hervorsteht. Die Verlängerungen 8, 10 reichen bis zum Außenrand des Sockels 2 des Kühlturms 1. Jede Zelle 4 ist mit einem zugehörigen Ventilator 12 versehen, der über dem Luftaustritt 11 jeder Zelle 4 platziert ist. Bei der in Fig. 1 dargestellten Ausführungsform des Kühlturmes ist für jeweils 2 x 2 Zellen ein zentraler Steigeschacht für die Zufuhr abzukühlenden Wassers vorgesehen. Die Steigeschächte 13, 14, 15 und 16 versorgen somit eine Anordnung aus vier mal 2 x 2 Zellen mit dem abzukühlenden Wasser.

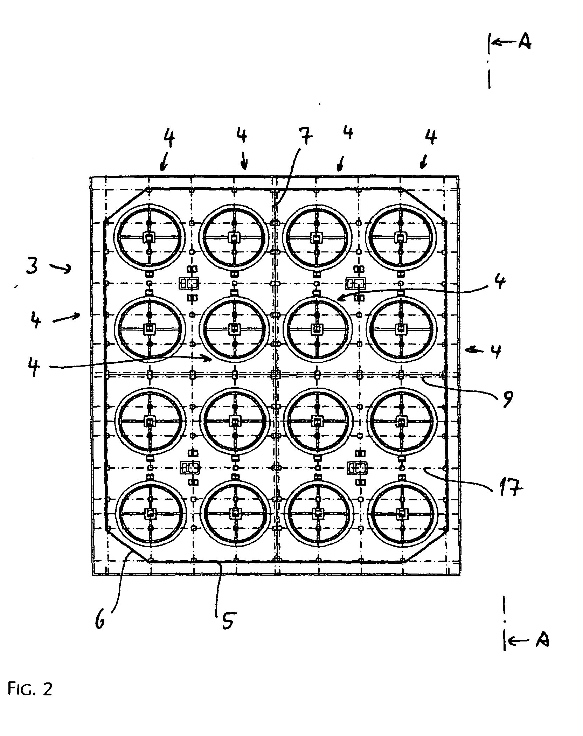

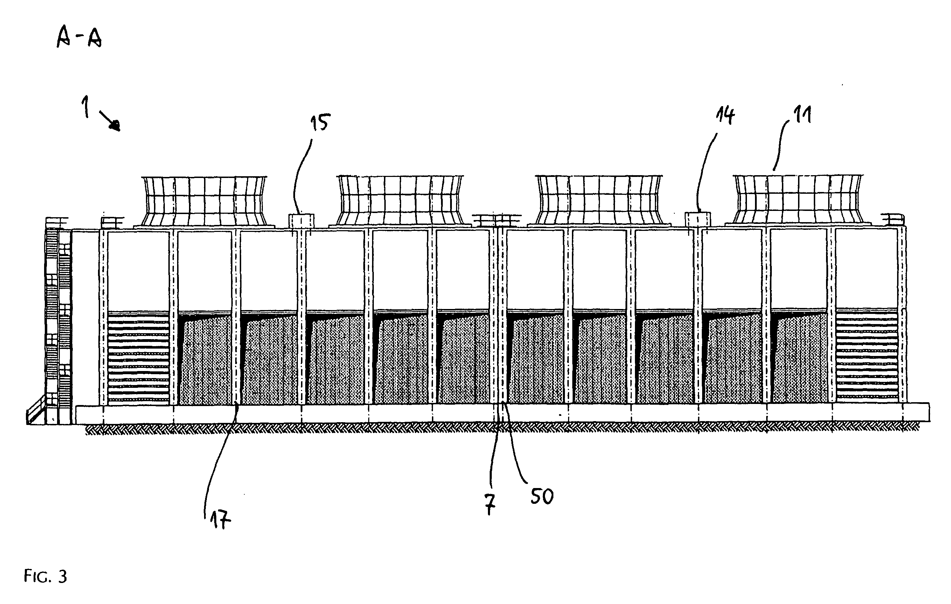

Die Hauptachsen 7, 9 sind als Betonwände 50, 60 ausgeführt und dienen dazu, bei einem Kühlturm in GFK-Bauweise eine Verbesserung der Standstabilität zu erreichen. Sie unterstützen als "Rückgrat" die vorherrschende GFK-Struktur 17, vgl. Fig. 2 und 3, wobei durch die Betonwände eine Einsparung in Querverstrebungen und Diagonalverstrebungen aus GFK erzielt werden kann. Die Verlängerungen 8, 10 der Betonwände 50, 60 verbessern die Zufuhr des von außen einwirkenden Luftstroms in die jeweiligen 2 x 2 Zellen-Anordnungen. Durch die abgeschrägten Ecken 6 an den Außenecken des Kühlturms wird zusätzlich die Luftumströmung des Kühlturms verbessert. Diese Maßnahmen dienen dazu, die Gefahr einer Rezirkulation der von den Ventilatoren abgegebenen Abluft zu verringern.

Die GFK-Struktur des Kühlturms ist aus den Figuren 2 und 3 ersichtlich. Sie reicht vom Fußpunkt des Kühlturms bis zum Kühlturmdach und ist "maschenartig" ausgeführt. Nicht dargestellt sind die Quer- und Diagonalverstrebungen zur Versteifung der Konstruktion. Durch den Luftaustritt 11 wird jeweils von den Ventilatoren 12 angesaugte warme Luft von unten nach oben in die Umgebung abgegeben. Der Luftaustritt erfolgt bei jeder Zelle auf gleicher Höhe, so dass eine konzentrierte und gebündelte Abluftströmung erzielbar ist.

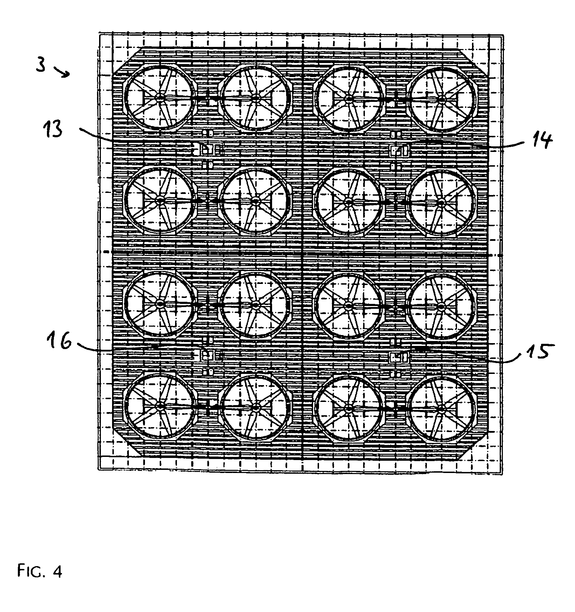

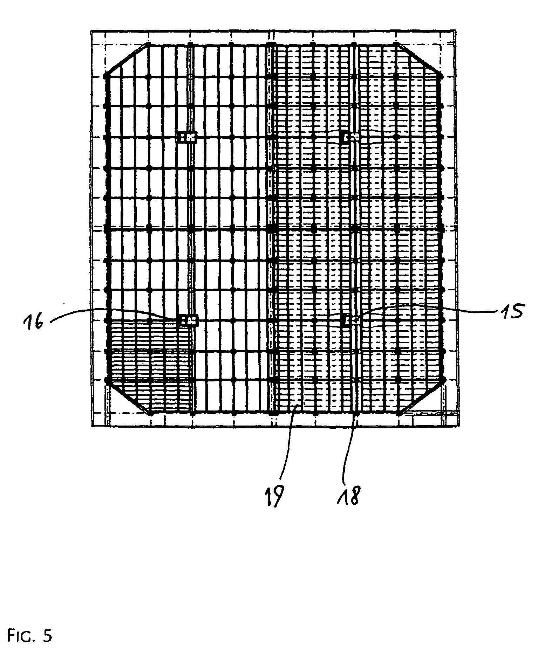

Von den jeweiligen Steigeschächten wird das abzukühlende Wasser zu einem zugehörigen Hauptverteilerrohr 18 weitergeleitet und von dort den Nebenverteilerrohren 19 zugeführt, vgl. Fig. 5. Der Weg vom Hauptverteilerrohr 18 zu den Nebenverteilerrohren 19 sollte so kurz wie möglich sein, um einen unnötigen Druckabfall zu vermeiden. Vorzugsweise sind die Nebenverteilerrohre derart angeordnet, dass sie eine Zelle vollständig bedecken. Die Nebenverteilerrohre einer Zelle können zu einer benachbarten Zelle parallel oder senkrecht dazu verlaufen. Auch die Anzahl der Nebenverteilerrohre in einer Zelle kann sich von derjenigen einer benachbarten Zelle unterscheiden. Dadurch kann die Kühlleistung jeder Zelle einzeln variiert werden. Dies kann je nach Standort und Umgebungsbedingungen, wie zum Beispiel vorherrschende Windrichtung, abgestimmt werden. Bei der in Fig. 4 dargestellten Ausführungsform sind sämtliche Nebenverteilerrohre in der Längsrichtung des Blockes angeordnet. Die einzelne Speisung jeder Zelle bietet den Vorteil, dass die Zellen individuell von einer Zufuhr des abzukühlenden Wassers getrennt werden können, so dass eine für jede Zelle gesonderte Ansteuerung erreichbar ist.

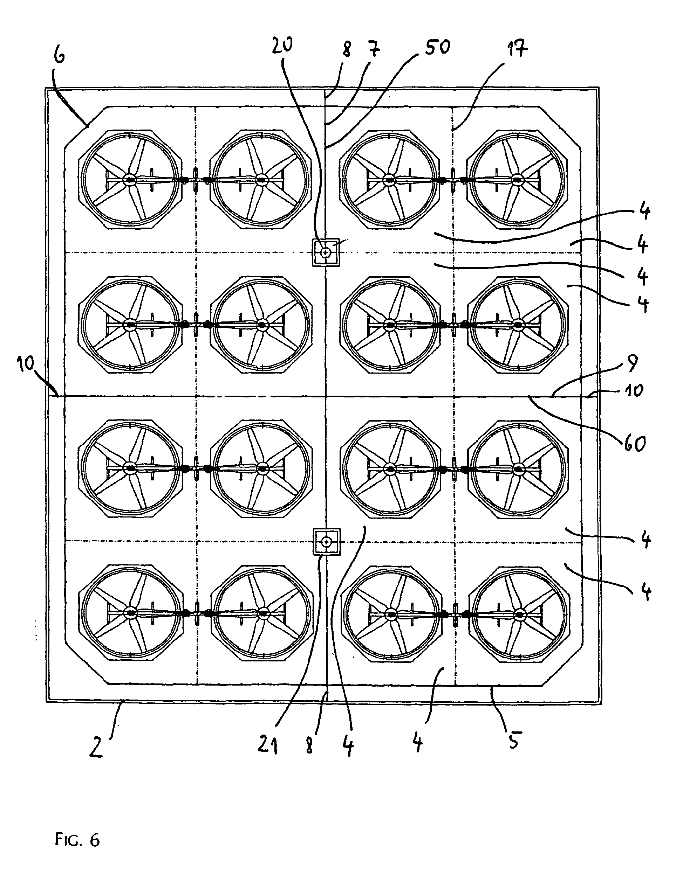

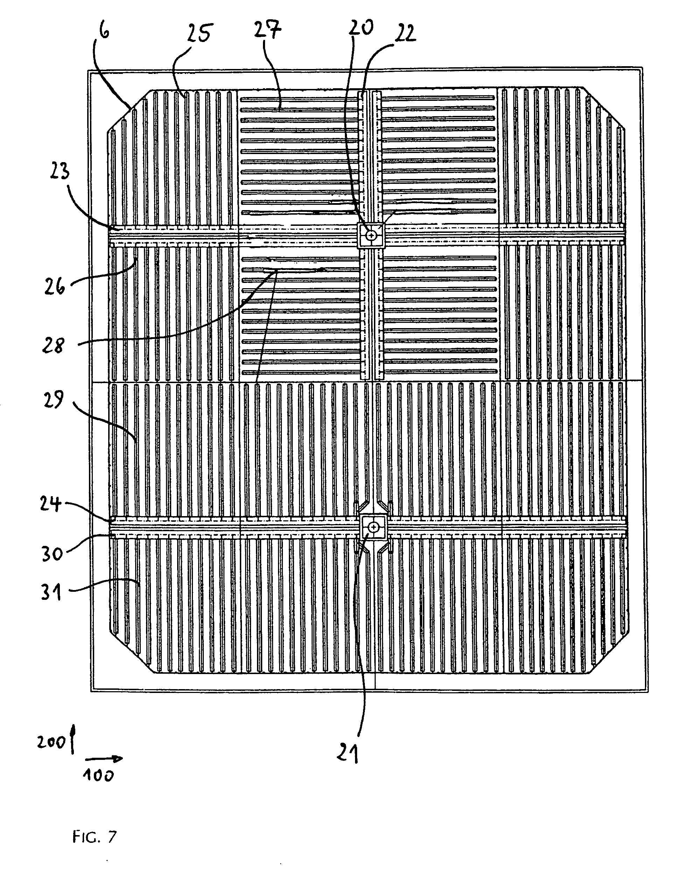

Fig. 6 zeigt eine zweite Ausführungsform eines erfindungsgemäßen Kühlturmes. Im Unterschied zur ersten Ausführungsform sind nur noch zwei Steigeschächte 20, 21 vorgesehen, die jeweils 8 Zellen mit Wasser versorgen. Dabei können die Nebenverteilerrohre auf unterschiedliche Weise angeordnet sein, siehe Fig. 7. Ein Hauptverteilerrohr 22 speist dazu die Nebenverteilerrohre 27, während das vom gleichen Steigeschacht 20 versorgte Hauptverteilerrohr 23 die Nebenverteilerrohe 25 versorgt. Die Nebenverteilerrohre 25 und 27 sind rechtwinklig zueinander angeordnet. Auf der zum Hauptverteilerrohr 23 gegenüberliegenden Seite werden auf analoge Weise durch ein zusätzliches Hauptverteilerrohr die Nebenverteilerrohre 26 und 28 mit Wasser versorgt.

In der in der Draufsicht unteren Hälfte des Kühlturmes in Fig. 7 sind die Nebenverteilerrohre jeweils in einer Richtung ausgerichtet. Vom Steigeschacht 21 werden Hauptverteilerrohre mit abzukühlendem Wasser versorgt. Vom Hauptverteilerrohr 24 gelangt das Wasser in die Nebenverteilerrohre 29, die sich für zwei benachbarte Zellen in gleiche Richtung erstrecken. Auf der gegenüberliegenden Seite verlaufen die an das Hauptverteilerrohr 30 angeschlossenen Nebenverteilerrohre 31 ebenfalls in Querrichtung des Kühlturms, wobei die Strömungsrichtung entgegengesetzt zu derjenigen der Nebenverteilerrohre 29 ist.

Bei der in der unteren Hälfte von Fig. 7 dargestellten Anordnung sind 8 Zellen (4 Zellen in einer Reihe und 4 Zellen in einer dazu gegenüberliegenden Reihe) mit Nebenverteilerrohren bedeckt, die alle in Querrichtung 200 des Kühlturmes ausgerichtet sind. Dabei sind nur sich in Längsrichtung 100 des Kühlturms erstreckende Hauptverteilerrohre erforderlich. Bei der in der oberen Hälfte in Fig. 7 dargestellten Anordnung der Hauptverteilerrohre sind zu den in Längsrichtung sich erstreckenden Hauptverteilerrohren auch sich in Querrichtung erstreckende Hauptverteilerrohre erforderlich. Dies zeigt, dass bei der in der unteren Hälfte von Fig. 7 dargestellten Anordnung weniger Hauptverteilerrohre benötigt werden.

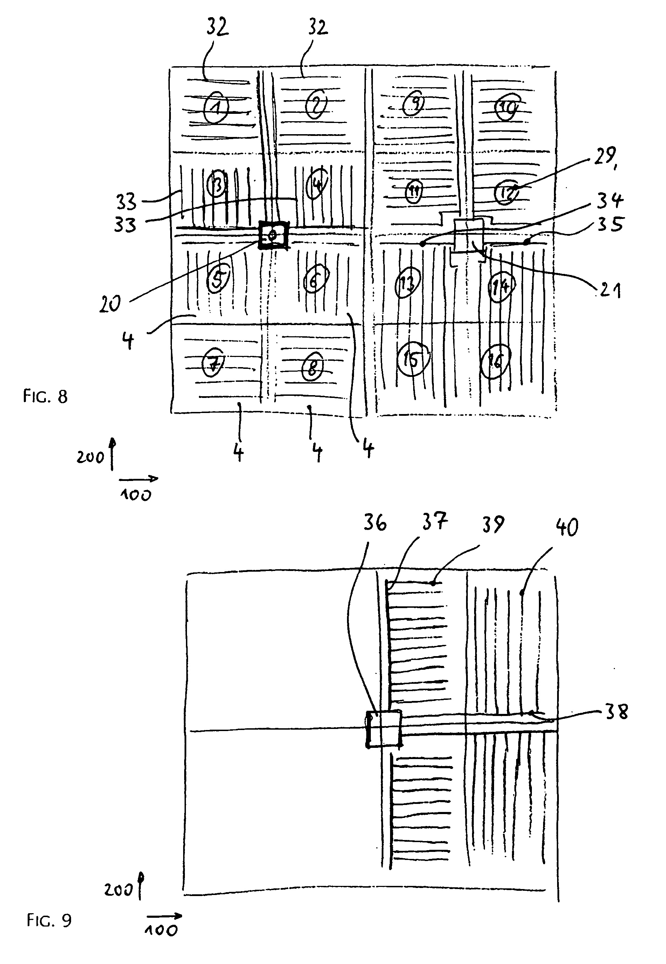

Weitere Kombinationen bezüglich der Anordnung von Hauptverteilerrohren und Nebenverteilerrohren sind in Fig. 8 und 9 dargestellt. In Fig. 8 sind die einzelnen Zellen des 16 Zellen aufweisenden Kühlturms jeweils nummeriert (Zahl mit Kreisumrandung). Die Zellen 1 und 2 sind mit in Längsrichtung angeordneten Nebenverteilerrohren 32, die Zellen 3 und 4 mit in Querrichtung angeordneten Nebenverteilerrohren 33 versehen, so dass senkrecht zueinander angeordnete Nebenverteilerrohre 32, 33 vorgesehen sind. Zum Speisen der Nebenverteilerrohre sind jeweils Hauptverteilerrohre in Längsrichtung und Querrichtung erforderlich, vgl. in Fig. 7 die Hauptverteilerrohre 22 und 23.

Die Nebenverteilerrohre in den Zellen 9, 11 bzw. 10, 12 in Fig. 8 sind jeweils in Längsrichtung 100 des Kühlturmes angeordnet, wobei nur zwei in Querrichtung 200 sich erstreckende Hauptverteilerrohre benötigt werden. Die Nebenverteilerrohre bedecken jeweils nur eine Zelle. Im Gegensatz dazu bedecken die Nebenverteilerrohre 13, 15 bzw. 14, 16 jeweils zwei benachbarte Zellen, wobei für insgesamt vier Zellen nur zwei Hauptverteilerrohre 34, 35 benötigt werden. Durch Trennen der Wasserzufuhr für ein Hauptverteilerrohr 34 oder 35 werden damit zwei Zellen des Kühlturmes, entweder 13, 15 oder 14, 16 auf einmal abgeschaltet.

Eine weitere Variante in der Anordnung von Nebenverteilerrohren zeigt Fig. 9, in der von einem einzigen Steigeschacht 36 insgesamt 16 Zellen versorgt werden. Vom Steigeschacht 36 gehen dabei für jeweils zwei in Querrichtung 200 benachbarte Zellen ein Hauptverteilerrohr 37, 38 aus, wobei die Nebenverteilerrohre 39 für zwei Zellen senkrecht zu den Nebenverteilerrohren 40 der benachbarten zwei Zellen verlaufen.

## Patentansprüche

1. Nasskühlturm (1) in Blockanordnung, mit mehreren Zellen (4) in einem Block (3), wobei die Blockanordnung innenliegende Wände (50, 60) aus Beton aufweist,
**dadurch gekennzeichnet,**
**dass** Wasser von einem Steigeschacht (13, 14, 15, 16, 20, 21, 36) über Hauptverteilerrohre (18, 22, 23, 24, 30, 34, 35, 37, 38) und sich daran anschließende Nebenverteilerrohre (25, 26, 27, 28, 29, 31, 32, 33, 39, 40) zu einer Zelle (4) transportierbar ist, wobei Nebenverteilerrohre (25, 26, 32, 39) einer Zelle (4) rechtwinklig zu Nebenverteilerrohren (27, 28, 33, 40) einer dazu benachbarten Zelle (4) angeordnet sind.

2. Nasskühlturm (1) gemäß Anspruch 1,
**dadurch gekennzeichnet,**
**dass** Wasser von einem Steigeschacht (13, 14, 15, 16, 20, 21, 36) über Hauptverteilerrohre (18, 22, 23, 24, 30, 34, 35, 37, 38) und sich daran anschließende Nebenverteilerrohre (25, 26, 27, 28, 29, 31, 32, 33, 39, 40) zu einer Zelle (4) transportierbar ist, wobei Nebenverteilerrohre (29) einer Zelle (4) parallel zu Nebenverteilerrohren (31) einer dazu benachbarten Zelle (4) angeordnet sind.

3. Nasskühlturm (1) gemäß einem der vorhergehenden Ansprüche,
**dadurch gekennzeichnet,**
**dass** für mindestens sechs Zellen (4) ein gemeinsamer Steigeschacht (20, 21, 36) zur Wassereinspeisung in die Zellen (4) vorgesehen ist.

4. Nasskühlturm (1) gemäß Anspruch 3,
**dadurch gekennzeichnet,**
**dass** aus dem gemeinsamen Steigeschacht (13, 14, 15, 16, 20, 21, 36) eine Einspeisung für einzelne Zellen (4) oder paarweise angeordnete Zellen (4) durchführbar ist.
